# EUROPÄISCHE PATENTSCHRIFT

(11) **EP 1 069 985 B1**
(45) Veröffentlichungstag und Bekanntmachung des Hinweises auf die Patenterteilung: **28.04.2004**
(21) Anmeldenummer: 99915730.8
(22) Anmeldetag: 01.04.1999
(51) Int. Cl.: B29C 65/18

(54) **KLEBSTOFF-FREIE VERBINDUNGEN VON POLYMERBAUTEILEN ZUR ERZEUGUNG VON GESCHLOSSENEN MIKRO- UND NANOKANALSTRUKTUREN**
ADHESIVE-FREE POLYMER COMPONENT JOINTS FOR PRODUCING CLOSED MICRO- AND NANO-CHANNEL STRUCTURES
JONCTIONS SANS ADHESIF DE COMPOSANTS POLYMERES POUR L'OBTENTION DE STRUCTURES FERMEES A MICROCANAUX ET NANOCANAUX

(30) Priorität: 07.04.1998 DE 19815632
(43) Veröffentlichungstag der Anmeldung: 24.01.2001
(73) Patentinhaber: Max-Planck-Gesellschaft zur Förderung der Wissenschaften e.V., 80539 München (DE)
(72) Erfinder: STUKE, Michael, D-37077 Göttingen (DE); LAPCZYNA, Markus, D-37083 Göttingen (DE); MÜLLER, Kurt, D-37077 Göttingen (DE)
(74) Vertreter: Weiss, Wolfgang, Dipl.-Chem. Dr.
(86) Internationale Anmeldenummer: PCT/EP1999/002238
(87) Internationale Veröffentlichungsnummer: WO 1999/051422

(56) Entgegenhaltungen:
- EP-A- 0 770 871
- WO-A-90/14940
- WO-A-94/29400
- WO-A-98/45693
- US-A- 3 997 386
- US-A- 4 315 050
- US-A- 4 875 956
- US-A- 5 156 710
- US-A- 5 500 459
- US-A- 5 589 860
- US-A- 5 882 465
- ROBERTS M A ET AL: "UV LASER MACHINED POLYMER SUBSTRATES FOR THE DEVELOPMENT OF MICRODIAGNOSTIC SYSTEMS" ANALYTICAL CHEMISTRY, Bd. 69, Nr. 11, 1. Juni 1997 (1997-06-01), Seiten 2035-2042, XP000696542 ISSN: 0003-2700
- PATENT ABSTRACTS OF JAPAN vol. 016, no. 072 (M-1213), 21. Februar 1992 (1992-02-21) & JP 03 262645 A (SEIKO EPSON CORP), 22. November 1991 (1991-11-22)
- PATENT ABSTRACTS OF JAPAN vol. 017, no. 196 (M-1397), 16. April 1993 (1993-04-16) & JP 04 341833 A (ISHIKAWAJIMA HARIMA HEAVY IND CO LTD), 27. November 1992 (1992-11-27)
- PATENT ABSTRACTS OF JAPAN vol. 095, no. 006, 31. Juli 1995 (1995-07-31) & JP 07 070335 A (MITSUI TOATSU CHEM INC), 14. März 1995 (1995-03-14)
- PATENT ABSTRACTS OF JAPAN vol. 098, no. 005, 30. April 1998 (1998-04-30) & JP 10 016244 A (CANON INC), 20. Januar 1998 (1998-01-20)
- PATENT ABSTRACTS OF JAPAN vol. 096, no. 009, 30. September 1996 (1996-09-30) & JP 08 118661 A (FUJI ELECTRIC CO LTD), 14. Mai 1996 (1996-05-14)

## Beschreibung

Die Erfindung betrifft ein Verfahren zur Herstellung von Polymerbauteilen mit darin enthaltenen Hohlstrukturen, z.B. in Form von geschlossenen Mikrooder/und Nanokanälen, bei dem keine Klebstoffe eingesetzt werden. Weiterhin betrifft die Erfindung die Verwendung des Verfahrens zur Herstellung von Polymerteilen für Nachweisverfahren.

Polymerbauteile, z.B. Kunststoff-Biochips, die in ihrem Inneren geschlossene Hohlstrukturen enthalten, wurden bisher durch ein Verfahren hergestellt, bei dem eine Kunststoffdeckschicht auf ein Vertiefungen enthaltenes Kunststoffsubstrat mit einem Klebstoff, z.B. mit einem UV-härtbaren Klebstoff, aufgeklebt wurde. Die Verwendung des Klebstoffs führte jedoch zu erheblichen Nachteilen. So wanderte der Klebstoff bei Auftrag einer zu großen Menge aufgrund von Kapillarwechselwirkungen in die Kanäle und machte sie zumindest teilweise unpassierbar. Andererseits traten bei Verwendung von zu geringen Klebstoffmengen Totvolumina in direkter Nachbarschaft zu den Kanälen auf. Darüber hinaus war das Verfahren sehr umständlich, da unter einem Mikroskop gearbeitet werden mußte. Schließlich verschlechterten sich aufgrund der Anwesenheit des Klebstoffs auch die chemischen oder/und spektroskopischen Eigenschaften des Kunststoffbauteils.

Aus DE-A-40 22 793 ist es bekannt, mittels eines erhitzten Schweißstempels eine Polymerfolie auf eine Mulden enthaltende Polymerplatte zu schweißen, ohne die Polymerplatte oder die Polymerfolie vorher zu erwärmen. Durch den Druck des Schweißstempel entstehen punktförmig gerasterte Verbindungsnähte. Der Schweißstempel wird auf eine Temperatur von 250 bis 300°C erhitzt (Spalte 4, Zeilen 63-65), so daß chemische Modifizierungen der Polymermaterialien in Verbindung mit einer evtl. Verringerung der Transparenz bzw. Erhöhung der Basisfluoreszenz auftreten können. Weiterhin entstehen in Nachbarschaft der Verbindungsnähte unerwünschte Totvolumina.

Die WO-A-90/14740 offenbart, zwei zu verschmelzende, Mikrokanäle enthaltende Kunststoffblöcke kalt aufeinanderzulegen und in einem Käfig anzuordnen, der beim anschließenden Aufheizen eine Ausdehnung der Blöcke in Richtung nach außen verhindert. Durch die thermische Ausdehnung werden die Blöcke zusammengepresst und verschmolzen.

Aus Roberts et al., UV Laser Machined Polymer Substrates for the Developement of Microdiagnostic Systems, Analytical Chemistry, Bd. 69, Nr. 11, 1. Juni 1997, Seiten 2035-2042, ISSN: 0003-2700 ist es bekannt, zwei Mikrostrukturen enthaltende Polymerbauteile thermisch schnell miteinander zu verkleben.

Die US-A-3,997,386 zeigt das Verbinden zweier glatter Flächen von Polymerbauteilen, indem die Teile zuerst bis kurz unter ihre Glasübergangstemperatur erhitzt und dann zusammengepresst werden.

Die prioritätsältere, jedoch nachveröffentlichte WO-A-98/45693 offenbart ein Verfahren zur klebstofffreien Herstellung von Polymerbauteilen und seine Verwendung in einem elektrischen Nachweisverfahren umfassend die Schritte:
(a) Bereitstellen eines Polymersubstrats, das auf zumindest einer Oberfläche Mikro- oder/und Nanokanalstrukturen bildende Vertiefungen aufweist,
(b) Aufpressen einer mit einer glatten Oberfläche versehenen Polymerabdeckung auf eine Vertiefungen aufweisende, ansonsten glatte Oberfläche des Substrats,
(c) langsames Aufheizen des Substrats mit der aufgepressten Abdeckung auf eine Temperatur von 2-5°C über der Glasübergangstemperatur des Polymers
(d) langsames Abkühlen auf Raumtemperatur mit einer Rate von 1 °C/min.

Die der vorliegenden Erfindung zugrundeliegende Aufgabe bestand somit darin, ein Verfahren zur Herstellung von mit Hohlstrukturen versehenen Kunststoff- bzw. Polymerbauteilen bereitszutellen, bei dem die zuvor genannten Nachteile des Standes der Technik mindestens teilweise vermieden werden.

Gelöst wird diese Aufgabe durch ein Verfahren zur Herstellung von Polymerbauteilen umfassend die Schritte:
(a) Bereitstellen eines Polymersubstrats, das auf zumindest einer Oberfläche Mikro- oder/und Nanokanalstrukturen bildende Vertiefungen aufweist,
(b) vor dem Aufheizen Aufpressen einer mit einer glatten Oberfläche versehenen Polymerabdeckung auf eine Vertiefungen aufweisende, ansonsten glatte Oberfläche des Substrats,
(c) nach Schritt (b) Aufheizen des Substrats mit der aufgepressten Abdeckung auf eine Temperatur die mindestens so hoch wie die Glasübergangstemperatur des Substrats und der Abdeckung ist, zu deren Verbindung und
(d) Abkühlen über eine Dauer von bis zu 30 sec.

Schritt (a) des erfindungsgemäßen Verfahrens umfaßt die Bereitstellung eines Polymersubstrats mit offenen Vertiefungen auf einer Oberfläche. Auf diese Oberfläche wird eine Abdeckung aufgebracht, um auf diese Weise ein Polymerbauteil mit nach oben hin geschlossenen Hohistrukturen herzustellen. Die hierfür verwendeten Polymersubstrate und Polymerabdeckungen werden aus in der Masse verarbeitbaren thermoplastischen Kunststoffen, vorzugsweise aus Acrylpolymeren, Polycarbonaten, Polystyrolen sowie Copolymeren und Gemischen davon ausgewählt. Vorzugsweise werden Polymersubstrat und Polymerabdeckung aus Acrylpolymeren, wie etwa Polyacylat-, Polymethacrylat und insbesondere Poly(methylmethacrylat)polymeren oder Polycarbonaten ausgewählt.

Das Polymersubstrat weist zumindest auf einer Oberfläche Vertiefungen auf. Diese Vertiefungen haben vorzugsweise eine Breite oder/und Tiefe im Bereich von 10 nm bis 2 mm, besonders bevorzugt von 100 nm bis 1 mm und am meisten bevorzugt 1 µm bis 500 µm. Die Vertiefungen umfassen Strukturen in Form von Kanälen.

Auf dieses Substrat wird durch das erfindungsgemäße Verfahren eine Polymerabdeckung, beispielsweise in Form einer Polymerfolie, ohne Verwendung von Klebstoffen auflaminiert. Dabei werden Substrat und Abdeckung vorzugsweise aus gleichartigen, insbesondere aus denselben Polymermaterialien ausgewählt. Weiterhin bevorzugt ist, daß zumindest die Abdeckung und insbesondere sowohl die Abdeckung als auch das Substrat aus optisch transparenten, d.h. im Bereich des visuellen oder/und UV-Lichts transparenten Materialien bestehen.

Zur Herstellung des Substrats mit einer Vertiefungen aufweisenden Oberfläche kann zunächst eine Kontaktmaske erzeugt werden und zwar indem man in eine Siliciummembran unter einer Chlorgasatmosphäre die gewünschten Mikrostrukturen mit einem Laser einätzt. Diese Kontaktmaske wird dann auf das Kunststoffsubstrat aufgelegt, und mit Laserlicht, z.B. mit einem UV-Vakuumlaser, bestrahlt, wobei die gewünschten Kanäle in den Kunststoff durch Ablation eingefräst werden. Die Einfrästiefe kann exakt mit dem Laser eingestellt werden und beträgt beispielsweise 100 nm pro Belichtungsvorgang. Die auf diese Weise erhaltenen Kanäle haben eine sehr glatte Oberfläche. Nach Entfernen der Maske erhält man dann das für das erfindungsgemäße Verfahren einsetzbare Polymersubstrat. Alternativ können die mit offenen Mikrostrukturen versehenen Substrate auch aus einer Masterform, z.B. durch Spritzguß, hergestellt werden. Schritt (b) des erfindungsgemäßen Verfahrens umfaßt das Aufbringen einer Polymerabdeckung auf eine oder mehrere Vertiefungen aufweisende Oberflächen des Substrats. Hierzu werden die Oberfläche der Polymerabdeckung, die beispielsweise auch eine Folie sein kann, und die Oberfläche des Substrats in sauberer und möglichst glatter Form bereitgestellt. Dann wird die Abdeckung auf dem Substrat positioniert und beide Teile zusammengepreßt, wobei der Anpressdruck vorzugsweise im Bereich von 0,1 bis 1000 kg/cm², z.B. 0,2-20 kg/cm², liegt.

Dann werden gemäß Schritt (c) des erfindungsgemäßen Verfahrens das Substrat mit der aufgepressten Abdeckung auf eine Temperatur aufgeheizt, die mindestens so hoch wie die Glasübergangstemperatur des Substrats oder/und der Abdeckung ist. Das Aufheizen erfolgt vorzugsweise in einem regelbaren Ofen langsam von der Ausgangstemperatur, z.B. Raumtemperatur, auf einen Wert knapp oberhalb der Glasübergangstemperatur eines der Polymeren. Die Glasübergangstemperatur ist von der Aufheizrate abhängig und kann vom Fachmann ohne weiteres durch einfache Versuche für unterschiedliche Materialien bestimmt werden. Vorzugsweise liegt die Aufheizdauer im Bereich von 0,5 bis 3 h, besonders bevorzugt im Bereich von 0,5 bis 1,5 h. Die Aufheiztemperatur liegt vorzugsweise in einem Bereich zwischen Glasübergangstemperatur und einer Temperatur, die 5°C über der Glasübergangstemperatur liegt. Besonders bevorzugt liegt die Aufheiztemperatur in einem Bereich zwischen 0,5 und 3°C über der Glasübergangstemperatur.

Nach Erreichen der Aufheiztemperatur werden das Substrat und die darauf befindliche Abdeckung vorzugsweise für eine bestimmte Zeitdauer im Bereich der Aufheiztemperatur gehalten. Diese Zeitdauer beträgt vorzugsweise mindestens 15 min, besonders bevorzugt mindestens 30 min, beispielsweise 40 bis 45 min. Die Höhe der Haitetemperatur ist vorzugsweise ± 3°C bezüglich der Aufheiztemperatur.

Schritt (d) des erfindungsgemäßen Verfahrens umfaßt das Abkühlen. Das Abkühlen bis herunter auf ca. 40°C erfolgt innerhalb weniger Sekunden, bis zu 30 sec. Nach dem Abkühlen kann das fertige Polymerteil entnommen werden.

Durch das erfindungsgemäße Verfahren gelingt eine Klebstoff-freie Verbindung zwischen Polymerabdeckungen, vorzugsweise in Form von transparenten Folien, und strukturierten, vorzugsweise transparenten Polymersubstratplatten. Diese Verbindung ist mechanisch und chemisch stabil. Das Verfahren ist mit relativ geringen Temperaturen in der Nähe der Glasübergangstemperatur, vorzugsweise knapp oberhalb der Glasübergangstemperatur durchführbar. Es entstehen keine Reaktionsprodukte, so daß das Verfahren extrem sauber und biokompatibel ist. Insbesondere werden keine verringerte Transparenz und keine erhöhte Fluoreszenz bei dem auf diese Weise erhältlichen Bauteil gemessen. Bei Verwendung von gleichartigen Abdeckungs- und Substratmaterialien entsteht ein Bauteil, welches nur aus einem einzigen Material besteht, und gegenüber mehrkomponentigen Systemen über vorteilhafte optische und elektrische Eigenschaften verfügit. Die optische Qualität ist so groß, so daß sogar einzelne Moleküle in Kanälen der Bauteile mit gutem Signal/Rauschverhältnis nachgewiesen werden können.

Noch ein weiterer Gegenstand der vorliegenden Erfindung ist ein Polymerbauteil mit darin enthaltenen Hohlstrukturen, welches durch das zuvor beschriebene Verfahren erhalten ist. Dieses Polymerbauteil enthält vorzugsweise als Hohistrukturen geschlossene, d.h. nach oben hin geschlossene Kanäle mit einer Breite oder/und Tiefe von 10 nm bis 2 mm und zeichnet sich dadurch aus, daß es im Inneren, insbesondere im Bereich der Hohlstrukturen, im wesentlichen oder sogar vollständig frei von Klebstoffen und thermischen Reaktionsprodukten ist. Weiterhin zeichnet sich das Polymerteil durch eine vollflächige Verbindung im Bereich der Kontaktflächen von Substrat und Aufdeckung auf, d.h. im Bereich der Hohlstrukturen sind keine Totvolumina vorhanden. Das Polymerteil kann für Nachweisverfahren, insbesondere in optischen oder/und elektrischen Nachweisverfahren eingesetzt werden.

Weiterhin wird die Erfindung durch das nachfolgende Beispiel beschrieben.

### Beispiel 1 Herstellung eines Poly(methylmethacrylat)-Bauteils

Eine PMMA-Folie wird auf eine mit Mikro- oder/und Nanokanalstrukturen versehene Oberfläche eines PMMA-Substratblocks positioniert. Die Oberflächen beider Teile sind sauber und glatt. Beide Teile werden zwischen zwei plane Glasplatten gelegt, welche dann in eine Presse gespannt werden. Der Anpressdruck in der Presse liegt im Bereich von 0,2 bis 20 kg/cm², z.B. 2 kg/cm². Die gesamte Einheit wird dann in einem regelbaren Temperofen langsam, vorzugsweise in einer Aufheizzeit von 0,5 bis 1,5 h auf einen Wert knapp oberhalb der Glasübergangstemperatur des Polymers erhitzt. Die Glasübergangstemperatur ist dabei von der Aufheizrate abhängig. Die optimale Fügetemperatur für die genannte Aufheizgeschwindigkeit beträgt 106 ± 0,5°C.

Anschließend wird die Einheit für eine Zeit von 40 bis 45 min bei einer Temperatur zwischen 104 °C und der optimalen Fügetemperatur gehalten. Dann erfolgt eine Abkühlung im Sekundenbereich. Nach der Ahkühlung kann die fertige Struktur aus der Vorrichtung entnommen werden.

### Beispiel 2 Herstellung eines Polycarbonat-Bauteils

Nach der in Beispiel 1 beschriebenen Methode wurde ein Polycarbonatbauteil hergestellt. Dabei wurde gefunden, daß sich auch dieses Material zur Herstellung von Bauteilen mit geschlossenen Mikro- und Nanokanalstrukturen eignet.

Die Fügetemperatur lag im Bereich zwischen 150 und 160°C.

## Patentansprüche

1. Verfahren zur klebstofffreien Herstellung von Polymerbauteilen umfassend die Schritte:
(a) Bereitstellen eines Polymersubstrats, das auf zumindest einer Oberfläche Mikro- oder/und Nanokanalstrukturen bildende Vertiefungen aufweist,
(b) vor dem Aufheizen Aufpressen einer mit einer glatten Oberfläche versehenen Polymerabdeckung auf eine Vertiefungen aufweisende, ansonsten glatte Oberfläche des Substrats,
(c) nach Schritt (b) Aufheizen des Substrats mit der aufgepressten Abdeckung auf eine Temperatur, die mindestens so hoch wie die Glasübergangstemperatur des Substrats und der Abdeckung ist, zu deren Verbindung und
(d) Abkühlen über eine Dauer von bis zu 30 sec.

2. Verfahren nach Anspruch 1,
**dadurch gekennzeichnet,**
**dass** das Polymersubstrat und die Polymerabdeckung ausgewählt werden aus Acrylpolymeren, Polycarbonaten, Polystyrolen sowie Copolymeren und Gemischen davon.

3. Verfahren nach Anspruch 2,
**dadurch gekennzeichnet,**
**dass** das Polymersubstrat und die Polymerabdeckung ausgewählt werden aus Acrylpolymeren, insbesondere Polymethylmethacrylat-Polymeren oder Polymercarbonaten.

4. Verfahren nach einem der Ansprüche 1 bis 3,
**dadurch gekennzeichnet,**
**dass** das Substrat Vertiefungen mit einer Breite oder/und Tiefe im Bereich von 10 nm bis 2 mm aufweist.

5. Verfahren nach Anspruch 4,
**dadurch gekennzeichnet,**
**dass** das Substrat Vertiefungen mit einer Breite oder/und Tiefe im Bereich von 100 nm bis 1 mm aufweist.

6. Verfahren nach Anspruch 5,
**dadurch gekennzeichnet,**
**dass** das Substrat Vertiefungen mit einer Breite oder/und Tiefe im Bereich von 1 µm bis 500 µm aufweist.

7. Verfahren nach einem der vorhergehenden Ansprüche,
**dadurch gekennzeichnet,**
**dass** Substrat und Abdeckung aus gleichartigen Polymermaterialien ausgewählt werden.

8. Verfahren nach einem der vorhergehenden Ansprüche,
**dadurch gekennzeichnet,**
**dass** zumindest die Abdeckung aus optisch transparenten Materialien ausgewählt wird.

9. Verfahren nach Anspruch 1,
**dadurch gekennzeichnet,**
**dass** der Anpressdruck im Bereich von 1 bis 1000 kg/cm² liegt.

10. Verfahren nach einem der vorhergehenden Ansprüche,
**dadurch gekennzeichnet,**
dss die Aufheizdauer im Bereich von 0,5 bis 3 h liegt.

11. Verfahren nach einem der vorhergehenden Ansprüche,
**dadurch gekennzeichnet,**
**dass** die Aufheiztemperatur maximal 5 °C über der Glasübergangstemperatur liegt.

12. Verfahren nach einem der vorhergehenden Ansprüche,
**dadurch gekennzeichnet,**
**dass** das Substrat und die darauf befindliche Abdeckung für eine Zeitdauer von mindestens 15 min im Bereich der Aufheiztemperatur gehalten werden.

13. Verfahren nach Anspruch 12,
**dadurch gekennzeichnet,**
**dass** das Substrat und die darauf befindliche Abdeckung für eine Zeitdauer von mindestens 30 min im Bereich der Aufheiztemperatur gehalten werden.

14. Verfahren nach einem der Ansprüche 12 oder 13,
**dadurch gekennzeichnet,**
**dass** die Haltetemperatur ± 3 °C bezüglich der Aufheiztemperatur ist.

15. Polymerbauteil mit darin enthaltenen Hohlstrukturen, erhalten durch ein Verfahren nach einem der Ansprüche 1 bis 14.

16. Verwendung des Verfahrens nach einem der Ansprüche 1 bis 14 zur Herstellung von Polymerbauteilen für Nachweisverfahren, insbesondene für das optische oder/und elektrische Nachweisverfahren.

## Claims

1. Process for the adhesive free production of polymeric components, comprising the steps of:
(a) providing a polymeric substrate which has depressions on at least one surface which form micro- and/or nanochannel structures,
(b) before heating apressing a polymeric covering which has a smooth surface onto a substrate surface which has depressions but is otherwise smooth,
(c) after step (b) heating the substrate with the apressed covering to a temperature which is at least as high as the glass transition temperature of the substrate and of the covering to bond them together, and
(d) cooling for a period of up to 30 sec.

2. Process according to Claim 1,
**characterized in that**
the polymeric substrate and the polymeric covering are selected from the group consisting of acrylic polymers, polycarbonates, polystyrenes, and also copolymers and mixtures of these.

3. Process according to Claim 2,
**characterized in that**
the polymeric substrate and the polymeric covering are selected from the group consisting of acrylic polymers, in particular of polymethyl methacrylate polymers, or of polymeric carbonates.

4. Process according to any of Claims 1 to 3,
**characterized in that**
the substrate has depressions with a width or/and depth within the range from 10 nm to 2 mm.

5. Process according to Claim 4,
**characterized in that**
the substrate has depressions with a width or/and depth within the range from 100 nm to 1 mm.

6. Process according to Claim 5,
**characterized in that**
the substrate has depressions with a width or/and depth within the range from 1 µm to 500 µm.

7. Process according to any of the preceding claims,
**characterized in that**
substrate and covering are selected from among polymeric materials of the same type.

8. Process according to any of the preceding claims,
**characterized in that**
at least the covering is selected from among optically transparent materials.

9. Process according to Claim 1,
**characterized in that**
the pressure applied is within the range from 1 to 1000 kg/cm².

10. Process according to any of the preceding claims,
**characterized in that**
the duration of heating is within the range from 0.5 to 3 h.

11. Process according to any of the preceding claims,
**characterized in that**
the heating temperature is not more than 5°C above the glass transition temperature.

12. Process according to any of the preceding claims,
**characterized in that**
the substrate and the covering present thereupon are held within the region of the heating temperature for a period of at least 15 min.

13. Process according to Claim 12,
**characterized in that**
the substrate and the covering present thereupon are held within the region of the heating temperature for a period of at least 30 min.

14. Process according to Claim 12 or 13,
**characterized in that**
the holding temperature is within ±3°C of the heating temperature.

15. Polymeric component with hollow structures present therein, obtainable by a process according to any of Claims 1 to 14.

16. Use of the process according to one of Claims 1 to 14 for producing polymeric components for detection procedures, in particular for the optical or/and electrical detection procedure.

## Revendications

1. Procédé de production sans adhésif de pièces polymères comprenant les étapes de :
(a) préparation d'un substrat polymère qui présente sur au moins une surface des évidements formant des structures à micro-et/ou nanocanaux,
(b) avant le chauffage, application par pression d'une couverture polymère munie d'une surface lisse sur une surface du substrat présentant des évidements et lisse ailleurs,
(c) après l'étape (b) chauffage du substrat avec la couverture appliquée par pression à une température qui est au moins aussi élevée que la température de transition vitreuse du substrat et de la couverture, pour leur liaison et
(d) refroidissement pendant une durée pouvant atteindre 30 s.

2. Procédé selon la revendication 1 **caractérisé en ce que** le substrat polymère et la couverture polymère sont choisis parmi les polymères acryliques, les polycarbonates, les polystyrènes ainsi que leurs copolymères et leurs mélanges.

3. Procédé selon la revendication 2 **caractérisé en ce que** le substrat polymère et la couverture polymère sont choisis parmi les polymères acryliques, en particulier les polymères de type poly(méthacrylate de méthyle) ou les polycarbonates.

4. Procédé selon l'une des revendications 1 à 3 **caractérisé en ce que** le substrat présente des évidements d'une largeur et/ou profondeur dans le domaine de 10 nm à 2 mm.

5. Procédé selon la revendication 4 **caractérisé en ce que** le substrat présente des évidements d'une largeur et/ou profondeur dans le domaine de 100 nm à 1 mm.

6. Procédé selon la revendication 5 **caractérisé en ce que** le substrat présente des évidements d'une largeur et/ou profondeur dans le domaine de 1 µm à 500 µm.

7. Procédé selon l'une des revendications précédentes **caractérisé en ce que** le substrat et la couverture sont choisis parmi des matières polymères de même type.

8. Procédé selon l'une des revendications précédentes **caractérisé en ce que** la couverture au moins est choisie parmi les matières optiquement transparentes.

9. Procédé selon la revendication 1 **caractérisé en ce que** la pression d'application par pression est située dans le domaine de 1 à 1000 kg/cm².

10. Procédé selon l'une des revendications précédentes **caractérisé en ce que** la durée de chauffage est située dans le domaine de 0,5 à 3 h.

11. Procédé selon l'une des revendications précédentes **caractérisé en ce que** la température de chauffage est située au maximum 5°C au dessus de la température de transition vitreuse.

12. Procédé selon l'une des revendications précédentes **caractérisé en ce que** le substrat et la couverture qui se trouve sur lui sont maintenus pendant une durée d'au moins 15 min dans le domaine de la température de chauffage.

13. Procédé selon la revendication 12 **caractérisé en ce que** le substrat et la couverture qui se trouve sur lui sont maintenus pendant une durée d'au moins 30 min dans le domaine de la température de chauffage.

14. Procédé selon l'une des revendications 12 ou 13 **caractérisé en ce que** la température de maintien est ± 3°C par rapport à la température de chauffage.

15. Pièce polymère contenant des structures creuses obtenue par un procédé selon l'une des revendications 1 à 14.

16. Utilisation du procédé selon l'une des revendications 1 à 14 pour la production de pièces polymères pour des procédés de mise en évidence, en particulier pour le procédé de mise en évidence optique et/ou électrique.
